# EUROPEAN PATENT SPECIFICATION

(11) **EP 3 683 083 B1**
(45) Date of publication and mention of the grant of the patent: **18.10.2023**
(21) Application number: 18853641.1
(22) Date of filing: 12.02.2018
(51) Int. Cl.: B60L 53/36, B60L 53/80, E04H 6/02, E04H 6/42, B60L 53/60

(54) **FULL-FEATURE CONTAINER AND CONTAINER SWITCHING STATION**
VOLLFUNKTIONALER BEHÄLTER UND BEHÄLTERWECHSELSTATION
RÉCIPIENT À CARACTÉRISTIQUES COMPLÈTES ET STATION DE COMMUTATION DE RÉCIPIENTS

(30) Priority: 05.09.2017 CN 201710792592; 05.09.2017 CN 201710791555
(43) Date of publication of application: 22.07.2020
(73) Proprietor: Shanghai Dianba New Energy Technology Co., Ltd., Shanghai 201308 (CN); Aulton New Energy Automotive Technology Group, Shanghai 201315 (CN)
(72) Inventor: ZHANG, Jianping, Shanghai 201308 (CN); ZHU, Minghou, Shanghai 201308 (CN); HUANG, Weichun, Shanghai 201308 (CN); DI, Shiyong, Shanghai 201308 (CN); CHEN, Zhihao, Shanghai 201308 (CN); JIE, Junmin, Shanghai 201308 (CN)
(74) Representative: Hannke Bittner & Partner mbB Regensburg
(86) International application number: PCT/CN2018/076363
(87) International publication number: WO 2019/047475

(56) References cited:
- EP-A2- 2 463 162
- CN-A- 102 180 200
- CN-A- 104 842 964
- CN-A- 106 043 246
- CN-A- 106 043 246
- CN-U- 205 951 929
- CN-U- 205 970 910
- CN-U- 207 241 464
- FR-A1- 2 721 559

## Description

The present application claims the priority of the CN201710792592.9, filed on September 5, 2017 and CN201710791555.6, filed on September 5, 2017.

### Field of invention

The present invention relates to full-feature container and container switching station.

### Prior arts

Recently, the vehicle exhaust emission is still an important factor of the environmental pollution problem, and in order to control the vehicle exhaust, people have developed gas-fueled vehicle, hydrogen-fueled vehicle, solar-powered vehicle and electric vehicle to replace fuel-type vehicle. Among them, electric vehicle is the most promising.

The present electric vehicle mainly includes directly charged type and quickly replaced type. The directly charged type is mainly used in the compact vehicle, for example taxi, family vehicle and the like. As a directly charged type electric vehicle, the charging to the vehicle is implemented by a charging pile which is built on the ground. However, the charging pile is not only inconvenient in management, but also difficult to achieve the centralized charging management of electric vehicle, with the increasing popularity of electric vehicle.

The quickly replaced type is mainly used in the public transportation system, which quickly replace the vehicle-mounted power battery of the electric bus, in order to implement on-line continuous operation of the electric bus. However, the present switching station possesses the issues of feature being single and module being loosing.

French patent (FR2721559A1) discloses process involves assembling all types of electric vehicles from a basic chassis (1) to which would be attached propulsion (2) and steering (3) modules. The vehicle would be completed by bodywork modules (5) giving the facilities of a lorry, private car or van as required. Electrical energy would be provided by a battery module (4) capable of delivering a range of voltages on a variety of terminal configurations. Fixed stations would be supplemented by transportable stations (7) having energy modules (4) and robots (8) to fit them rapidly.

Chinese patent (CN102180200A) discloses an automatic vehicle-mounted mobile battery charging and exchanging station for an electric vehicle, which comprises a tractor, a semitrailer and a battery box storage rack, a battery box, an automatic battery exchanging device, a charging system, an electric quantity counting system, an automatic control unit and the like which are arranged on the semitrailer, wherein the storage rack can store a plurality of battery boxes three-dimensionally; the automatic battery exchanging device comprises a lifting table, a transmigration machine and a shifting machine; the automatic battery exchanging device can automatically transport and store the battery boxes, so automatic dismantling and exchange of the battery boxes can be realized; and the charging system is used for automatically charging the battery boxes. The station is complete in system, compact in structure, flexible in maneuvering, low in investment and short in construction period, so the automatic battery charging/exchanging requirement of the battery of the electric vehicle can be met.

Chinese patent (CN102180200A) belongs to the field of electric car battery distribution and particularly provides a small-size automatic battery exchanging station. The small-size automatic battery exchanging station aims at solving the problems that an existing battery exchanging station is large in land occupation area, civil engineering needs to be conducted, transportation is difficult, and full-automatic battery exchanging cannot be conducted. For the purposes, the small-size automatic battery exchanging station comprises a battery bin, a battery exchanging platform, a battery exchanging system and a control system. The battery bin is used for storing a battery and charging the battery. The battery exchanging system is used for replacing a battery of an electric car with the battery of the battery bin. The battery exchanging platform is used for parking the electric car and lifting the electric car through a lifting device. According to the small-size automatic battery exchanging station, the electric car is lifted up through the lifting device, the battery exchanging platform and the battery bin are wrapped up through a container at the same time, therefore, any civil engineering does not need to be conducted, the battery exchanging station can be overall carried, the position of the battery exchanging station can be arranged flexibly, and the size of the battery exchanging station can be freely expanded as required.

### Content of the present invention

The technical problem of the present invention is to overcome the deficiency of feature being single and module being loosing, and thus provide a full-feature container and a container switching station.

The present invention solves the technical problem mentioned above by the technical solutions below:
Firstly, a full-feature container, according to appended claim 1.

Preferably, the positions for accommodating batteries include a charging position, a new position and an old position, wherein the charging position is used to charge the battery of the vehicle, and the new position is used to store the battery of the vehicle which is fully charged, and the old position is used to store the battery which is taken out from the vehicle.
preferably, the charging chamber is also provided therein with a power distribution cabinet and a main controlling cabinet, wherein the power distribution cabinet is used to supply power to the charging stand, and the main controlling cabinet is used to supply power to the battery-swapping shuttle, the palletizer and the monitoring device.
preferably, the switching chamber is provided therein with a clamping lane, wherein the clamping lane is used to park and locate the vehicle, wherein the clamping lane is provided with an opening to replace the battery for the battery-swapping shuttle, and wherein the clamping lane is provided with an up-down ramp along the direction of vehicle entry and exit.
preferably, the monitoring device includes a controlling panel and a communicating cabinet, wherein the controlling panel is used to send the execution instruction to the devices in the switching chamber and the charging chamber, and wherein the communicating cabinet is used to receive the data in the switching chamber and the charging chamber and transmit thereof to the controlling panel.
preferably, the charging stand is provided with a detecting apparatus, wherein the detecting apparatus detects the working condition of the charging stand, and wherein the monitoring device receives the working condition data sent by the detecting apparatus and sends the execution instruction to the palletizer according to this working condition data.
preferably, a detecting apparatus is provided on the clamping lane, wherein the detecting apparatus detects the working condition of the clamping lane, and wherein the monitoring device receives the working condition data sent by the detecting apparatus, and sends the execution instruction to the battery-swapping shuttle according to this working condition data.

Secondly, a container switching station, comprising a full-feature container according to appended claim 1 and a charging container;
wherein the full-feature container is provided therein with a switching chamber and a charging chamber which are adjacent to each other, wherein the switching chamber is connected to the charging chamber by means of an access passage, wherein the switching chamber is used to replace the battery of the vehicle, and wherein the charging chamber is used to store the battery of the vehicle and charge the battery of the vehicle;
wherein the charging container is connected to the full-feature container and is communicated with the charging chamber;
wherein the charging container is used to charge the battery of the vehicle.
preferably, the charging container is disposed perpendicularly with respect to the full-feature container.
preferably, first side of the charging chamber is provided with the access passage, and second side of the charging chamber is opened up and is led to the charging container, wherein the first side is adjacent to the second side.
preferably, the container switching station also comprises: a battery-swapping shuttle, a palletizer and a first charging stand;
wherein the battery-swapping shuttle is disposed within the full-feature container, and is able to move back and forth between the switching chamber and the charging chamber, wherein the battery-swapping shuttle is used to replace the battery on the vehicle in the switching chamber; wherein the first charging stand is disposed within the charging chamber;
wherein the palletizer is used to transfer the battery between the first charging stand and the battery-swapping shuttle, and wherein the palletizer is able to move back and forth between the charging chamber and the charging container.
preferably, the first charging stand includes a charging position, a new position and an old position;
wherein the charging position is used to charge the battery of the vehicle, and the new position is used to store the battery of the vehicle which is fully charged, and the old position is used to store the battery which is taken out from the vehicle.
preferably, the charging chamber is also provided therein with a first power distribution cabinet and a main controlling cabinet, wherein the first power distribution cabinet is used to supply power to the first charging stand, and the main controlling cabinet is used to supply power to the battery-swapping shuttle and the palletizer.
preferably, the container switching station also comprises: a second charging stand and a palletizer;
wherein the second charging stand is disposed in the charging container, and wherein a plurality of charging positions is provided on the second charging stand;
wherein the palletizer is used to take out and place the battery on the second charging stand, wherein the palletizer is able to move back and forth between the charging chamber and the charging container and transfer the battery between the charging chamber and the second charging stand.
preferably, the second charging stand is located at both sides of moving path of the palletizer. preferably, the charging container is provided therein with a second power distribution cabinet, wherein the second power distribution cabinet is used to supply power to the second charging stand.
preferably, the second power distribution cabinet is disposed at one side of the second charging stand away from the full-feature container.
preferably, the full-feature container is also provided therein with a monitoring chamber, wherein the switching chamber is located between the monitoring chamber and the charging chamber; wherein a monitoring device is provided in the monitoring chamber, wherein the monitoring device is used to monitor the working condition of the switching chamber, the charging chamber and the charging container.

The positive improved effects of the present invention are that: The full-feature container integrates monitoring, switching and charging into one entity, which achieves multi-functionalization and integration of the switching station. The container switching station integrates switching and charging voluminously into one entity, which achieves multi-functionalization and integration of the switching station.

### Brief description of the drawings

Fig.1 is a three-dimensional structure diagram of full-feature container of first embodiment according to the present invention.
Fig. 2 is an inner planar structure diagram of full-feature container of first embodiment according to the present invention.
Fig. 3 is a three-dimensional structure diagram of container switching station of second embodiment according to the present invention.
Fig. 4 is an inner planer structure diagram of container switching station of second embodiment according to the present invention.
Fig. 5 is a breakdown structure diagram of container switching station of second embodiment according to the present invention.
Fig. 6 is a partial three-dimensional structure diagram of container switching station of second embodiment according to the present invention.
Fig. 7 is an enlarged structure diagram of Part A in Fig. 6.
Fig. 8 is a partial mounting structure diagram of container switching station of second embodiment according to the present invention.

### Detailed description of the preferred embodiment

Combining with figures., the present invention will be further illustrated by the following embodiments, but the present invention is not limited thereto.

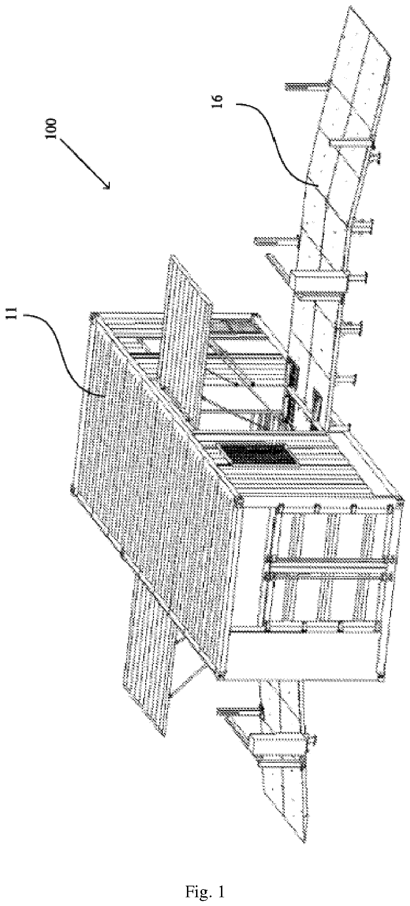

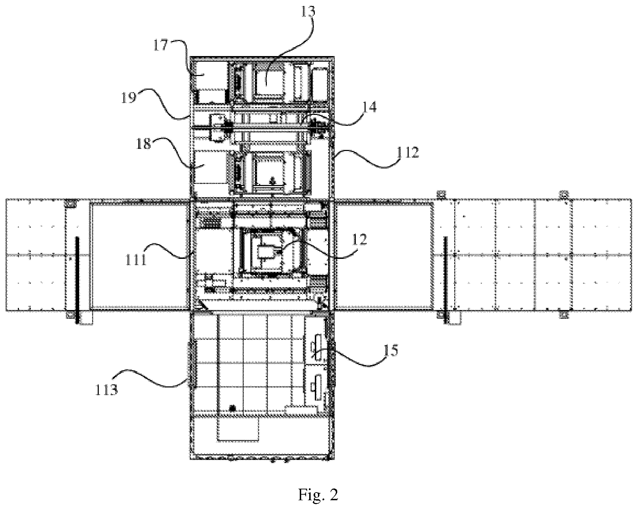

The full-feature container will be described according to the first embodiment combining with Fig. 1 and Fig. 2.

The full-feature container 10 comprises: a box body 11 and a battery-swapping shuttle 12 located inside the box body 11, a charging stand 13, a palletizer 14, a monitoring device 15 and the like. The box body 11 is provided therein with a switching chamber 111, a charging chamber 112 and a monitoring chamber 113, wherein the switching chamber 111 is located between the monitoring chamber 113 and the charging chamber 112, wherein the switching chamber 111 is connected to the charging chamber 112 by means of an access passage, wherein the switching chamber 111 is used to replace the battery of a vehicle, and wherein the charging chamber 112 is used to store the battery of the vehicle and charge the battery of the vehicle. In the present embodiment, the monitoring chamber 113 is provided next to the switching chamber 111, wherein the monitoring chamber 113 is provided therein with a plurality of monitoring devices 15, in order to monitor the situation within the switching chamber 111 in real time nearby.

The battery-swapping shuttle 12 is provided therein with the box body 11, and is able to move back and forth between the switching chamber 111 and the charging chamber 112. The access passage between the switching chamber 111 and the charging chamber 112 is paved with a rail, wherein the battery-swapping shuttle 12 moves along the rail.

The palletizer 14 is disposed within the charging chamber 112, which is used to take out and place the battery on the charging stand 13 and replace the battery with the battery-swapping shuttle 12. The charging chamber 112 is also paved with a rail, wherein the palletizer 14 moves along the rail, such that the palletizer 14 is able to transport the battery to the different positions of the charging stand 13. The moving rail of the palletizer 14 is perpendicular to the moving rail of the battery-swapping shuttle 12, while the charging stand 13 is disposed along the moving rail of the palletizer 14, such that the palletizer 14 can transport the battery onto the charging stand 13 directly without turning over after receiving the battery from the battery-swapping shuttle 12.

The charging stand 13 is disposed in the charging chamber 112, which includes a plurality of positions for accommodating batteries. The positions include a charging position, a new position and an old position, wherein the charging position is used to charge the battery of the vehicle, and the new position is used to store the battery of the vehicle which is fully charged, and the old position is used to store the battery which is taken out from the vehicle. When the battery is fully charged, the battery moves to the new position for being stored without being charging all the time. When there are too many batteries needed to be charged, the batteries can also be stored in the old position temporarily and wait to be charged in sequence, which prevent disposing overmuch charging positions.

The charging chamber 112 is provided therein with a power distribution cabinet 18 and a main controlling cabinet 17, wherein the power distribution cabinet 18 is used to supply power to the charging stand 13, and the main controlling cabinet 17 is used to supply power to the battery-swapping shuttle 12, the palletizer 14 and the monitoring device 15.

The switching chamber 111 is disposed next to the charging chamber 112. The switching chamber 111 is provided therein with a clamping lane, wherein the clamping lane is used to park and locate the vehicle, wherein the clamping lane is provided with an opening to replace the battery for the battery-swapping shuttle 12. The clamping lane is provided with an up-down ramp 16 along the direction of vehicle entry and exit.

The monitoring device 15 is disposed in the monitoring chamber 113 and is used to receive working condition data in the switching chamber 111 and the charging chamber 112 and send the corresponding execution instruction.

The monitoring device 15 includes a controlling panel and a communicating cabinet, wherein the controlling panel is used to send the execution instruction to the devices in the switching chamber 111 and the charging chamber 112, and wherein the communicating cabinet is used to receive the data in the switching chamber 111 and the charging chamber 112 and transmit thereof to the controlling panel.

The charging stand 13 is also provided with a detecting apparatus, wherein the detecting apparatus detects the working condition of the charging stand 13, and wherein the monitoring device 15 receives the working condition data sent by the detecting apparatus and sends the execution instruction to the palletizer 14 according to this working condition data. Specifically, the detecting apparatus can detect the vacant old position on the charging stand 13, and transmit signal to the communicating cabinet, and the communicating cabinet transmits the signal to the controlling panel, and the controlling panel controls the palletizer 14 according to the received signal to transport the battery received from the battery-swapping shuttle 12 to the corresponding vacant old position. The detecting apparatus also can detect whether the battery on the charging chamber has been fully charged or whether the charging chamber is vacant, and transmit the signal to the controlling panel, and the controlling panel controls the palletizer 14 according to the received signal to transport the fully-charged battery from the charging chamber to the new position or to transport the un-charged battery from the old position to the charging chamber. The detecting apparatus may be an infrared sensor or a coulometer detector.

A detecting apparatus is also provided on the clamping lane, and the detecting apparatus detects the working condition of the clamping lane, and the monitoring device 15 receives the working condition data sent by the detecting apparatus and sends the execution instruction to the battery-swapping shuttle 12 according to this working condition data. Specifically, the detecting apparatus detects the vehicle on the clamping lane has already arrived at a specified charging location, and transmits the signal to the communicating cabinet, and the communicating cabinet transmits the signal to the controlling panel, and the controlling panel controls the battery-swapping shuttle 12 to move to the switching location according to the received signal, and unloads the battery of the vehicle, and then transfers the battery on the palletizer 14. The detecting apparatus may be an infrared sensor.

The charging chamber 112 has an opening 19, wherein the opening 19 is used to communicate with the charging container (not shown). One surface of the charging chamber 112 is provided with an access passage, wherein the opening 19 can be provided on any one surface of the rest five surfaces of the charging chamber 112. That is, the charging container can be connected to the side of the full-feature container 10 perpendicularly, and also can be connected to the full-feature container 10 with a "straight line" shape, and also can be provided above or below the full-feature container 10. Fig. 2 shows a situation wherein the opening 19 is located on the side adjacent to the access passage. At this moment, the charging container can be connected to the side of the full-feature container 10 perpendicularly.

When the charging container is provided above or below the full-feature container 10, the moving rail of the palletizer 14 is paved in up and down direction, and the palletizer 14 transfers the battery into the charging container which is disposed above or below the full-feature container 10 along the moving rail, or a lifter is provided to lift the palletizer 14, such that the battery can be transferred into the charging container which is disposed above or below the full-feature container 10.

The switching process of the full-feature container 10 will be briefly described hereinafter.

The vehicle drives into the clamping lane through the up ramp, and the battery-swapping shuttle 12 enters into the clamping lane and unloads the battery, and transports the unloaded battery from the switching chamber 111 to the charging chamber 112 and transfers the battery to the palletizer 14, wherein the palletizer 14 accommodates the battery in the old position which is on the charging stand 13, and takes down the fully-charged battery from the new position, and transfers the fully-charged battery to the battery-swapping shuttle 12, wherein the battery-swapping shuttle 12 transports the battery from the charging chamber 112 to the switching chamber 111 after received the fully-charged battery, and assembles the battery onto the vehicle. After the vehicle is assembled with the fully-charged battery, drive out the full-feature container 10 from the down ramp.

Such full-feature container 10 integrates monitoring, switching and charging into one entity, which achieves multi-functionalization and integration of the switching station.

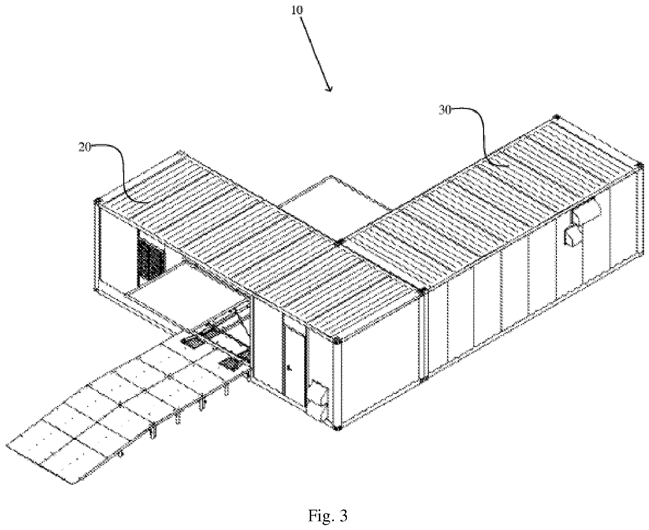

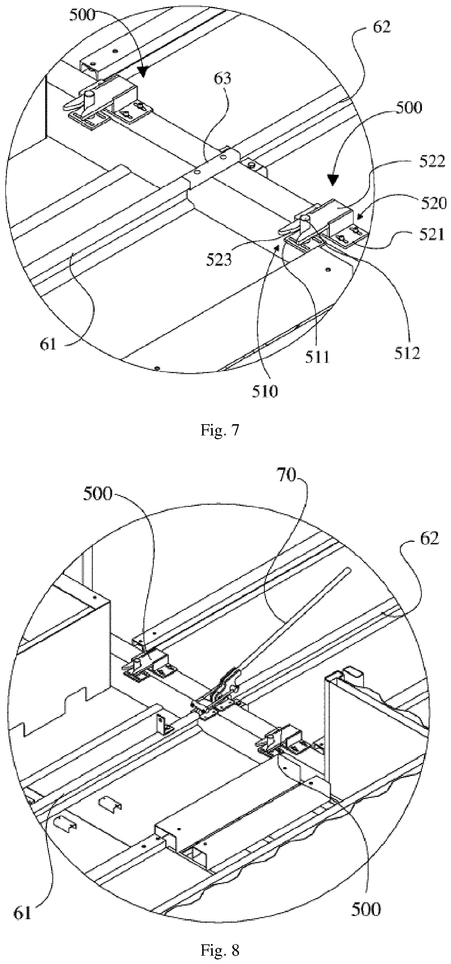

The container switching station will be described according to the second embodiment combining with Figs. 3-8.

As shown in Fig. 1 and Fig. 2, the container switching station 100 comprises: a full-feature container 20 and a charging container 30.

The full-feature container 20 is provided therein with a switching chamber 21 and a charging chamber 22 which are adjacent to each other, and the switching chamber 21 is connected to the charging chamber 22 by means of an access passage, wherein the switching chamber 21 is used to replace the battery of the vehicle, and the charging chamber 22 is used to store the battery of the vehicle and charge the battery of the vehicle. The full-feature container 20 is also provided therein with a monitoring chamber 23, wherein the switching chamber 21 is located between the monitoring chamber 23 and the charging chamber 22; the monitoring chamber 23 is provided therein with a monitoring device 231, wherein the monitoring device 231 is used to monitor the working condition of the switching chamber 21, the charging chamber 22 and charging container 30. In the present embodiment, the monitoring chamber 23 is provided next to the switching chamber 21, wherein the monitoring chamber 23 is provided therein with a plurality of monitoring devices 231, in order to monitor the situation within the switching chamber 21 in real time nearby.

Optionally, the monitoring chamber 23 may not be provided, and the monitoring device 231 is provided inside of the switching chamber 21 and the charging chamber 22 or is provided outside of the container switching station 100.

The charging container 30 is connected to the full-feature container 20 and is communicated with the charging chamber 22; the charging container 30 is used to charge the battery of the vehicle. The charging container 30 is communicated with the full-feature container 20 through a port 26 on the full-feature container 20. One side of the charging container 30 has an opening 33, wherein the opening 33 is jointed to the port 26 of the full-feature container 20. In the present embodiment, the charging container 30 is disposed perpendicularly with respect to the full-feature container 20. One side of the charging chamber 22 is provided with an access passage, wherein the port 26 is provided on a side adjacent to such one side, as shown in Fig. 2.

As shown in Fig. 3, the full-feature container 20 and the charging container 30 are connected with each other by inter-locking tightly between a first corner piece 41 of the four corners of the port 26 disposed on the full-feature container 20 and a second corner piece 42 of the four corners of the opening 33 disposed on the charging container 30. The first corner piece 41 and the second corner piece 42 are detachably connected with a bridge lock (not shown), wherein the bridge lock is able to lock the first corner piece 41 and the second corner piece 42 tightly with each other, such that the port 26 of the full-feature container 20 is jointed to the opening 33 of the charging container 30, and the full-feature container 20 and the charging container 30 is fixed to each other. The first corner piece 41 is detachably connected to the second corner piece 42 by the bridge lock, such that achieves the detachment and installation conveniently between the full-feature container 20 and the charging container 30.

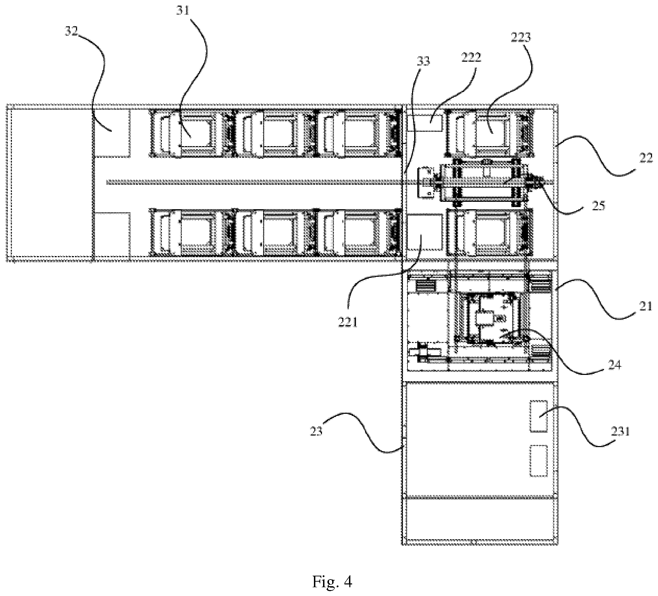

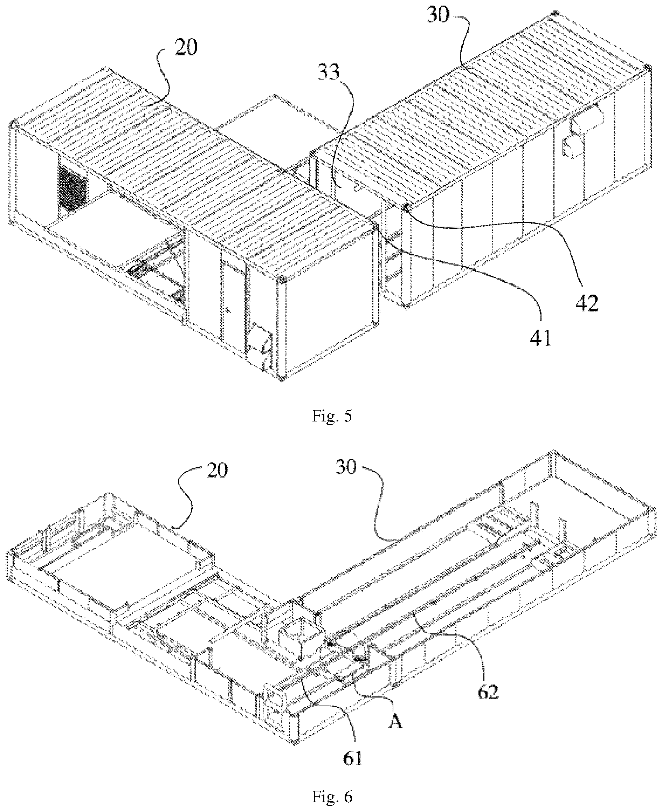

As shown in Fig. 4 and Fig. 5, the container switching station is also provided therein with an orientated-guiding mechanism 500, which is used to joint first rail 61 of the full-feature container 20 and second rail 62 of the charging container 30 on a same straight line, which ensures the jointing precision of the first rail 61 and the second rail 62, such that after the full-feature container 20 and the charging container 30 are folded to form a whole container switching station, the palletizer 25 mentioned below can be moved from the first rail 61 to the second rail 62 steady, such that completes the operation of transferring the battery between the charging chamber and the second charging stand. A connecting rail 63 is also provided between the first rail 61 and the second rail 62, wherein two ends of the connecting rail 63 are connected to the first rail 61 and the second rail 62 respectively, such that the palletizer 25 can pass the jointing position of the first rail 61 and the second rail 62 steady and reliably.

The orientated-guiding mechanism 500 includes a first orientated-guiding subassembly and a second orientated-guiding subassembly. The first orientated-guiding subassembly is detachably connected to the bottom surface of the full-feature container 20 which is next to the port 26. The second orientated-guiding subassembly is detachably connected to the bottom surface of the charging container 30 which is next to the opening 33, and is engaged with the first orientated-guiding subassembly.

The first orientated-guiding subassembly is a guiding pin 510, and the second orientated-guiding subassembly is a guiding-locating seat 520.

The guiding-locating seat 520 has a guiding-locating groove 523 which is used to abut the guiding pin 510 engaging therein. Wherein, the guiding-locating seat 520 includes a first base 521 and a guiding-locating plate 522, wherein the bottom of the first base 521 is connected to the bottom surface of the charging container 30. One end of the guiding-locating plate 522 is connected to the top of the first base 521, and another end of the guiding-locating plate 522 is provided with a guiding-locating groove 523 which is concaved towards the inside of the charging container 30, and the guiding pin 510 is abutted at the bottom of the guiding-locating groove 523. The guiding-locating groove 523 includes a guiding groove and a limiting opening which are provided successively, wherein the guiding pin 510 is abutted at the bottom of the limiting opening, and the wide of the guiding groove is increased gradually in a direction of the guiding pin 510 sliding out from the guiding-locating groove 523.

In addition, the guiding pin 510 includes a second base 511 and a guiding post 512, wherein the second base 511 of the guiding pin 510 is connected to the bottom surface of the full-feature container 20, and the guiding post 512 is connected to the top of the second base 511 of the guiding pin 510, and guiding post 512 is abutted at the bottom of the guiding-locating groove 523.

Optionally, the structures of the first orientated-guiding subassembly and the second orientated-guiding subassembly can be exchanged with each other.

In the present embodiment, the container switching station includes two orientated-guiding mechanisms 500, wherein the first orientated-guiding subassemblies of the two orientated-guiding mechanisms 500 are located at two sides of the first rail 61 respectively, and the second orientated-guiding subassemblies of the two orientated-guiding mechanisms 500 are located at two sides of the second rail 62 respectively. Two sides of the rail are provided with two orientated-guiding mechanisms 500 respectively, such that the jointing of the first rail 61 and the second rail 62 are more quick and accurate. Of course, persons skilled in the art may choose the quantity of the orientated-guiding mechanism 500 according to the actual demand.

As shown in Fig. 6, the first orientated-guiding subassembly and the second orientated-guiding subassembly may achieve engaging with each other by quick clamp 70, such that achieve the locating with each other between the full-feature container 20 and charging container 30 quickly and conveniently.

In the present embodiment, charging container 30 is connected to the side of the full-feature container 20 perpendicularly. Optionally, the charging container 30 also may be connected to the full-feature container with a "straight line" shape, or may be provided above or below the full-feature container 20.

When the charging container 30 is provided above or below the full-feature container 20, the moving rail of the palletizer 25 is paved in up and down direction, and the palletizer 25 transfers the battery into the charging container 30 which is disposed above or below the full-feature container 20 along the moving rail, or a lifter is provided to lift the palletizer 25, such that the battery can be transferred into the charging container 30 which is disposed above or below the full-feature container 20.

The full-feature container 20 is provided therein with: a battery-swapping shuttle 24, a palletizer 25 and a first charging stand 223.

The battery-swapping shuttle 24 is able to move back and forth between the switching chamber 21 and the charging chamber 22. The first charging stand 223 is disposed within the charging chamber 22. The palletizer 25 is used to transfer the battery between the first charging stand 223 and the battery-swapping shuttle 24, and transfer the fully-charged battery from the first charging stand 223 to the battery-swapping shuttle 24, and transfer the battery needed to be charged from the battery-swapping shuttle 24 to the first charging stand 223, wherein the palletizer 25 is able to move back and forth between the charging chamber 22 and the charging container 30.

The first charging stand 223 includes a charging position, a new position and an old position. The charging position is used to charge the battery of the vehicle, and the new position is used to store the battery of the vehicle which is fully charged, and the old position is used to store the battery which is taken out from the vehicle.

The charging chamber 22 is also provided therein with a first power distribution cabinet 221 and a main controlling cabinet 222, wherein the first power distribution cabinet 221 is used to supply power to the first charging stand 223, and the main controlling cabinet 222 is used to supply power to the battery-swapping shuttle 24 and the palletizer 25.

The charging container 30 is provided therein with a second charging stand 31. The second charging stand 31 is disposed in the charging container 30, wherein a plurality of charging positions is provided on the second charging stand 31. The palletizer 25 may also take out and place the battery on the second charging stand 31, and is able to transfer the battery between the first charging stand 223 and the second charging stand 31.

The first charging stand 223 and second charging stand 31 both are located at two sides of the moving path of the palletizer 25. The palletizer 25 may take out and place the battery from the two sides of the charging stand respectively, and thus enhance the space utilization of the container switching station 100.

The charging container 30 is provided therein with a second power distribution cabinet 32, wherein the second power distribution cabinet 32 is used to supply power to the second charging stand 31. The charging container 30 is separate distributed with respect to the full-feature container 20, and the charging process thereof will not be affected by the full-feature container 20.

The second power distribution cabinet 32 is disposed at one side of the second charging stand 31 away from the full-feature container 20. The second power distribution cabinet 32 is separated from the first power distribution cabinet 221, which is safe relatively, and will not increase the driving journey of the palletizer 25 due to adding the second power distribution cabinet 32. The first charging stand 223 and the second charging stand 31 are both provided with a detecting apparatus, wherein the detecting apparatus detects the working condition of the first charging stand 223 and the second charging stand 31, and wherein the monitoring device 231 receives the working condition data sent by the detecting apparatus and sends the execution instruction to the palletizer 25 according to this working condition data. Specifically, the detecting apparatus may detect the vacant old position on the first charging stand 223, and transmit signal to the monitoring device 231, and the monitoring device 231 controls the palletizer 25 according to the received signal to transmit the battery received from the battery-swapping shuttle 24 to the corresponding vacant old position. The detecting apparatus may also detect whether the batteries on the charging position of the first charging stand 223 and the second charging stand 31 have been fully charged or whether the charging position is vacant, and transmit the signal to the monitoring device 231, and the monitoring device 231 controls the palletizer 25 according to the received signal to transport the fully-charged battery from the charging position to the new position or to transport the un-charged battery from the old position to the charging position. The monitoring device 231 chooses and controls the palletizer 25 according to the actual demand to put the battery into the charging position of the first charging stand 223 and the second charging stand 31 in order to be charged. Preferably, the monitoring device 231 controls the palletizer 25 to preferentially put the battery into the charging position of the first charging stand 223 in order to be charged.

The switching process of the container switching station 100 will be briefly described hereinafter.

The vehicle drives into the clamping lane of the switching chamber through the up ramp (the up-down ramp is not shown in Fig. 2), and the battery-swapping shuttle 24 enters into the clamping lane and unloads the battery of the vehicle, and transports the unloaded battery from the switching chamber 21 to the charging chamber 22 and transfers the battery to the palletizer 25, wherein the palletizer 25 accommodates the battery in the old position which is on the charging stand, and takes down the fully-charged battery from the new position, and transfers the fully-charged battery to the battery-swapping shuttle 24, wherein the battery-swapping shuttle 24 transports the battery from the charging chamber 22 to the switching chamber 21 after received the fully-charged battery, and assembles the fully-charged battery onto the vehicle. After assembled with the fully-charged battery, the vehicle drives out the full-feature container 20 from the down ramp. After the palletizer 25 transfers the fully-charged battery to the battery-swapping shuttle 24, the palletizer 25 puts the battery in the old position into the first charging stand 223 or the second charging stand 31 in order to be charged, according to the instruction sent by the monitoring device 231.

Such container switching station 100 integrates switching and charging voluminously into one entity, which achieves multi-functionalization and integration of the switching station.

In the description of the present invention, it is necessary to understand the terms 'up', 'down', 'front', 'back', 'left', 'right', 'vertical', 'horizontal', 'top', 'bottom', 'inside', 'outside' and other indicated direction and position relationship are based on the direction or position relationship shown in the attached drawings, only for the convenience of describing the invention and simplifying the description, rather than indicating or implying that the device or components referred to must have a specific direction, be constructed and operated in a specific direction. Therefore, this cannot be understood as a limitation of the present invention.

It is to be understood that the foregoing description of two preferred embodiments is intended to be purely illustrative of the principles of the invention, rather than exhaustive thereof, and that changes and variations will be apparent to those skilled in the art, and that the present invention is not intended to be limited other than expressly set forth in the following claims.

## Claims

1. A full-feature container, which comprises:
a box body (11), wherein the box body (11) is provided therein with a switching chamber (111), a charging chamber (112) and a monitoring chamber (113), wherein the switching chamber (111) is connected to the charging chamber (112) by means of an access passage, wherein the switching chamber (111) is used to replace the battery of the vehicle, and wherein the charging chamber (112) is used to store the battery of the vehicle and charge the battery of the vehicle;
a battery-swapping shuttle (12), wherein the battery-swapping shuttle (12) is disposed within the box body, and is able to move back and forth between the switching chamber (111) and the charging chamber (112); the access passage between the switching chamber (111) and the charging chamber (112) is paved with a rail, wherein the battery-swapping shuttle (12) moves along the rail;
a charging stand (13), wherein the charging stand (13) is disposed in the charging chamber (112), and comprises a plurality of positions for accommodating batteries; and
a monitoring device(15), wherein the monitoring device(15) is disposed in the monitoring chamber(113) and is used to receive working condition data in the switching chamber(111) and in the charging chamber(112) and send corresponding execution instruction;
which is **characterized in that**,
wherein the charging chamber(112) has an opening(19), wherein the opening(19) is usable to communicate with a charging container (30);
the charging chamber (112) is also provided therein with a palletizer (14), wherein the palletizer (14) is used to take out and place the battery on the charging stand (13) and replace the battery with the battery-swapping shuttle (12);
the charging chamber (112) is also paved with a rail, the palletizer (14) is movable along the rail, the moving rail of the palletizer (14) is perpendicular to the moving rail of the battery-swapping shuttle (12), the charging stand (13) is disposed along the moving rail of the palletizer (14),
the moving path of the palletizer (14) is perpendicular to the moving path of the battery-swapping shuttle (12).

2. The full-feature container according to claim 1, wherein the positions include a charging position, a new position and an old position, wherein the charging position is used to charge the battery of the vehicle, and the new position is used to store the battery of the vehicle which is fully charged, and the old position is used to store the battery which is taken out from the vehicle.

3. The full-feature container according to at least one of claims 1-2, wherein the charging chamber (112) is also provided therein with a power distribution cabinet (18) and a main controlling cabinet (17), wherein the power distribution cabinet (18) is used to supply power to the charging stand (13), and the main controlling cabinet (17) is used to supply power to the battery-swapping shuttle (12), the palletizer (14) and the monitoring device (15);
preferably, the charging stand (13) is provided with a detecting apparatus, wherein the detecting apparatus detects the working condition of the charging stand (13), and wherein the monitoring device (15) receives the working condition data sent by the detecting apparatus and sends the execution instruction to the palletizer (14) according to this working condition data.

4. The full-feature container according to at least one of claims 1-3, wherein the switching chamber(111) is provided therein with a clamping lane, wherein the clamping lane is used to park and locate the vehicle, wherein the clamping lane is provided with an opening(19) to replace the battery for the battery-swapping shuttle(12), and wherein the clamping lane is provided with an up-down ramp(16) along a direction of vehicle entry and exit;
preferably, a detecting apparatus is provided on the clamping lane, wherein the detecting apparatus detects the working condition of the clamping lane, and wherein the monitoring device (15) receives the working condition data sent by the detecting apparatus, and sends the execution instruction to the battery-swapping shuttle (12) according to this working condition data.

5. The full-feature container according to at least one of claims 1-4, wherein the monitoring device(15) includes a controlling panel and a communicating cabinet, wherein the controlling panel is used to send the execution instruction to the devices in the switching chamber(111) and in the charging chamber(112), and wherein the communicating cabinet is used to receive the data in the switching chamber(111) and in the charging chamber(112) and transmit thereof to the controlling panel.

6. The full-feature container according to claim 5, wherein
the detecting apparatus detects a vacant old position on the charging stand, and transmits signal to the communicating cabinet, and the communicating cabinet transmits the signal to the controlling panel, and the controlling panel controls the palletizer according to the received signal to transport the battery received from the battery-swapping shuttle to the corresponding vacant old position;
preferably, the detecting apparatus also detects whether the battery on the charging chamber has been fully charged or whether the charging chamber is vacant, and transmits the signal to the controlling panel, and the controlling panel controls the palletizer according to the received signal to transport the fully-charged battery from the charging chamber to the new position or to transport the un-charged battery from the old position to the charging chamber;
preferably, the detecting apparatus is an infrared sensor or a coulometer detector;
and/or, the detecting apparatus detects the vehicle on the clamping lane has already arrived at a specified charging location, and transmits the signal to the communicating cabinet, and the communicating cabinet transmits the signal to the controlling panel, and the controlling panel controls the battery-swapping shuttle to move to the switching location according to the received signal, and unloads the battery of the vehicle, and then transfers the battery on the palletizer;
preferably, the detecting apparatus is an infrared sensor.

7. A container switching station, which is **characterized in that** it comprises a full-feature container (20) according to at least one of claims 1-6 and a charging container (30);
wherein the full-feature container (20) is provided therein with a switching chamber (21) and a charging chamber (22) which are adjacent to each other, wherein the switching chamber (21) is connected to the charging chamber (22) by means of an access passage, wherein the switching chamber (21) is usable to replace the battery of the vehicle, and wherein the charging chamber (22) is usable to store the battery of the vehicle and charge the battery of the vehicle;
wherein the charging container (30) is connected to the full-feature container (20) and is communicated with the charging chamber (22);
wherein the charging container (30) is usable to charge the battery of the vehicle.

8. The container switching station according to claim 7, wherein the charging container (30) is disposed perpendicularly with respect to the full-feature container (20);
preferably, first side of the charging chamber (22) is provided with the access passage and second side of the charging chamber (22) is opened up and is led to the charging container (30), wherein the first side is adjacent to the second side.

9. The container switching station according to claim 7 or 8, wherein the container switching station (100) also comprises: a battery-swapping shuttle (24), a palletizer (25) and a first charging stand (223);
wherein the battery-swapping shuttle (24) is disposed within the full-feature container (20), and is able to move back and forth between the switching chamber (21) and the charging chamber (22), wherein the battery-swapping shuttle (24) is usable to replace the battery on the vehicle in the switching chamber (21);
wherein the first charging stand (223) is disposed within the charging chamber (22);
wherein the palletizer (25) is usable to transfer the battery between the first charging stand (223) and the battery-swapping shuttle (24), and wherein the palletizer (25) is able to move back and forth between the charging chamber (22) and the charging container (30).

10. The container switching station according to at least one of claims 7-9, wherein the container switching station(100) also comprises: a second charging stand(31) and a palletizer(25);
wherein the second charging stand (31) is disposed in the charging container (30), and wherein a plurality of charging positions is provided on the second charging stand (31);
wherein the palletizer (25) is usable to take out and place the battery on the second charging stand (31), wherein the palletizer (25) is able to move back and forth between the charging chamber (22) and the charging container (30) and transfer the battery between the charging chamber (22) and the second charging stand (31).

11. The container switching station according to claim 10, wherein the second charging stand(31) is located at both sides of the moving path of the palletizer(25).

12. The container switching station according to claim 10 or 11, wherein the charging container(30) is provided therein with a second power distribution cabinet(32), wherein the second power distribution cabinet(32) is used to supply power to the second charging stand(31); preferably, the second power distribution cabinet (32) is disposed at one side of the second charging stand (31) away from the full-feature container (20).

## Patentansprüche

1. Ein Vollgutbehälter, der Folgendes umfasst:
einen Gehäusekörper (11), wobei der Gehäusekörper (11) im Inneren mit einer Schaltkammer (111), einer Ladekammer (112) und einer Überwachungskammer (113) versehen ist, wobei die Schaltkammer (111) mit der Ladekammer (112) mittels eines Zugangspassage verbunden ist, wobei die Schaltkammer (111) verwendet wird, um die Batterie des Fahrzeugs zu ersetzen, und wobei die Ladekammer (112) verwendet wird, um die Batterie des Fahrzeugs zu lagern und die Batterie des Fahrzeugs zu laden;
ein Batteriewechsel-Shuttle (12), wobei das Batteriewechsel-Shuttle (12) innerhalb des Gehäusekörpers angeordnet ist und in der Lage ist, sich zwischen der Schaltkammer (111) und der Ladekammer (112) hin- und herzubewegen; die Zugangspassage zwischen der Schaltkammer (111) und der Ladekammer (112) ist mit einer Schiene gepflastert, wobei sich das Batteriewechsel-Shuttle (12) entlang der Schiene bewegt;
einen Ladeständer (13), wobei der Ladeständer (13) in der Ladekammer (112) angeordnet ist und eine Vielzahl von Positionen zur Aufnahme von Batterien umfasst; und
eine Überwachungsvorrichtung (15), wobei die Überwachungsvorrichtung (15) in der Überwachungskammer (113) angeordnet ist und verwendet wird, um Arbeitszustandsdaten in der Schaltkammer (111) und in der Ladekammer (112) zu empfangen und entsprechende Ausführungsanweisungen zu senden;
die sich dadurch auszeichnet, dass,
wobei die Füllkammer (112) eine Öffnung (19) aufweist, wobei die Öffnung (19) zur Verbindung dazu verwendet wird, mit einem Füllbehälter (30) zu kommunizieren;
die Ladekammer (112) im Inneren auch mit einem Palettierer (14) versehen ist, wobei der Palettierer (14) verwendet wird, um die Batterie herauszunehmen und auf den Ladeständer (13) zu legen und die Batterie durch das Batteriewechsel-Shuttle (12) zu ersetzen;
die Ladekammer (112) ebenfalls mit einer Schiene gepflastert ist, der Palettierer (14) entlang der Schiene beweglich ist, die bewegliche Schiene des Palettierers (14) senkrecht zu der beweglichen Schiene des Batteriewechsel-Shuttles (12) ist, der Ladeständer (13) entlang der beweglichen Schiene des Palettierers (14) angeordnet ist,
die Bewegungsbahn des Palettierers (14) senkrecht zu der Bewegungsbahn des Batteriewechsel-Shuttles (12) verläuft.

2. Vollgutbehälter nach Anspruch 1, wobei die Positionen eine Ladeposition, eine neue Position und eine alte Position umfassen, wobei die Ladeposition zum Aufladen der Fahrzeugbatterie verwendet wird, und die neue Position zum Aufbewahren der vollständig aufgeladenen Fahrzeugbatterie verwendet wird, und die alte Position zum Aufbewahren der aus dem Fahrzeug entnommenen Batterie verwendet wird.

3. Vollgutbehältnis nach mindestens einem der Ansprüche 1 bis 3, wobei der Laderaum (112) zusätzlich mit einem Stromverteilerschrank (18) und einem Hauptsteuerschrank (17) versehen ist, wobei der Stromverteilerschrank (18) zur Stromversorgung des Ladeständers (13) und der Hauptsteuerschrank (17) zur Stromversorgung des Batteriewechsel-Shuttles (12), des Palettierers (14) und der Überwachungseinrichtung (15) dient; vorzugsweise ist der Ladeständer (13) mit einer Erfassungsvorrichtung versehen, wobei die Erfassungsvorrichtung den Arbeitszustand des Ladeständers (13) erfasst, und wobei die Überwachungsvorrichtung (15) die von der Erfassungsvorrichtung gesendeten Arbeitszustandsdaten empfängt und die Ausführungsanweisung an den Palettierer (14) gemäß diesen Arbeitszustandsdaten sendet.

4. Vollgutbehälter nach mindestens einem der Ansprüche 1 bis 3, wobei die Schaltkammer (111) im Inneren mit einer Klemmbahn versehen ist, wobei die Klemmbahn zum Abstellen und Auffinden des Fahrzeugs dient, wobei die Klemmbahn mit einer Öffnung (19) zum Auswechseln der Batterie für das Batteriewechsel-Shuttle (12) versehen ist, und wobei die Klemmbahn mit einer Auf-Ab-Rampe (16) entlang einer Ein- und Ausfahrtrichtung des Fahrzeugs versehen ist;
vorzugsweise ist eine Erfassungsvorrichtung auf der Klemmbahn vorgesehen, wobei die Erfassungsvorrichtung den Arbeitszustand der Klemmbahn erfasst, und wobei die Überwachungsvorrichtung (15) die von der Erfassungsvorrichtung gesendeten Arbeitszustandsdaten empfängt und die Ausführungsanweisungen an das Batteriewechsel-Shuttle (12) entsprechend diesen Arbeitszustandsdaten sendet.

5. Vollgutbehälter nach mindestens einem der Ansprüche 1 - 4, wobei die Überwachungseinrichtung (15) ein Steuerpult und einen Kommunikationsschrank aufweist, wobei das Steuerpult dazu dient, die Ausführungsanweisung an die Geräte in der Schaltkammer (111) und in der Ladekammer (112) zu senden, und wobei der Kommunikationsschrank dazu dient, die Daten in der Schaltkammer (111) und in der Ladekammer (112) zu empfangen und an das Steuerpult zu übertragen.

6. Vollgutbehälter nach Anspruch 5, wobei
die Erkennungsvorrichtung eine freie alte Position auf dem Ladeständer erkennt und ein Signal an den Kommunikationsschrank sendet, und der Kommunikationsschrank das Signal an das Steuerpult sendet, und das Steuerpult den Palettierer entsprechend dem empfangenen Signal steuert, um die vom Batteriewechsel-Shuttle empfangene Batterie zu der entsprechenden freien alten Position zu transportieren;
vorzugsweise erkennt die Erfassungsvorrichtung auch, ob die Batterie in der Ladekammer vollständig geladen wurde oder ob die Ladekammer leer ist, und übermittelt das Signal an das Steuerpult, und das Steuerpult steuert den Palettierer entsprechend dem empfangenen Signal, um die vollständig geladene Batterie von der Ladekammer zu der neuen Position zu transportieren oder die ungeladene Batterie von der alten Position zur Ladekammer zu transportieren;
vorzugsweise handelt es sich bei dem Erfassungsgerät um einen Infrarotsensor oder einen Coulometer-Detektor;
und/oder die Erfassungsvorrichtung erkennt, dass das Fahrzeug auf der Klemmbahn bereits an einem bestimmten Ladeort angekommen ist, und überträgt das Signal an den Kommunikationsschrank, und der Kommunikationsschrank überträgt das Signal an das Steuerpult, und das Steuerpult steuert das Batteriewechsel-Shuttle, um sich entsprechend dem empfangenen Signal zum Wechselort zu bewegen, und entlädt die Batterie des Fahrzeugs und übergibt dann die Batterie an den Palettierer; vorzugsweise ist die Erfassungsvorrichtung ein Infrarotsensor.

7. Behälterwechselstation, **dadurch gekennzeichnet, dass** sie einen Vollgutbehälter (20) nach mindestens einem der Ansprüche 1-6 und einen Ladebehälter (30) aufweist;
wobei der Vollgutbehälter (20) im Inneren mit einer Schaltkammer (21) und einer Ladekammer (22) versehen ist, die zueinander benachbart sind, wobei die Schaltkammer (21) mit der Ladekammer (22) mittels einer Zugangspassage verbunden ist, wobei die Schaltkammer (21) zum Auswechseln der Fahrzeugbatterie verwendet werden kann, und wobei die Ladekammer (22) zum Lagern der Fahrzeugbatterie und zum Laden der Fahrzeugbatterie verwendet werden kann;
wobei der Ladebehälter (30) mit dem Vollgutbehälter (20) verbunden ist und mit der Ladekammer (22) in Kommunikation steht;
wobei der Ladebehälter (30) zum Laden der Fahrzeugbatterie verwendet werden kann.

8. Behälterwechselstation nach Anspruch 7, wobei der Ladebehälter (30) senkrecht zum Vollgutbehälter (20) angeordnet ist;
vorzugsweise ist die erste Seite der Ladekammer (22) mit der Zugangspassage versehen und die zweite Seite der Ladekammer (22) ist geöffnet und wird zum Ladebehälter (30) geführt, wobei die erste Seite an die zweite Seite angrenzt.

9. Behälterwechselstation nach Anspruch 7 oder 8, wobei die Behälterwechselstation (100) außerdem umfasst: ein Batteriewechsel-Shuttle (24), einen Palettierer (25) und ein erstes Ladegestell (223);
wobei das Batteriewechsel-Shuttle (24) innerhalb des Vollfunktionsbehälters (20) angeordnet ist und sich zwischen der Schaltkammer (21) und der Ladekammer (22) hin- und herbewegen kann, wobei das Batteriewechsel-Shuttle (24) dazu verwendet werden kann, die Batterie des Fahrzeugs in der Schaltkammer (21) zu ersetzen;
wobei der erste Ladeständer (223) innerhalb der Ladekammer (22) angeordnet ist;
wobei der Palettierer (25) verwendet werden kann, um die Batterie zwischen dem ersten Ladeständer (223) und dem Batteriewechsel-Shuttle (24) zu transportieren, und wobei der Palettierer (25) in der Lage ist, sich zwischen der Ladekammer (22) und dem Ladebehälter (30) hin und her zu bewegen.

10. Behälterwechselstation nach mindestens einem der Ansprüche 7 bis 9, wobei die Behälterwechselstation (100) auch einen zweiten Ladestand (31) und einen Palettierer (25) umfasst;
wobei der zweite Ladeständer (31) in dem Ladebehälter (30) angeordnet ist, und wobei eine Vielzahl von Ladepositionen an dem zweiten Ladeständer (31) vorgesehen ist;
wobei der Palettierer (25) zum Entnehmen und Ablegen der Batterie auf dem zweiten Ladeständer (31) verwendet werden kann, wobei der Palettierer (25) in der Lage ist, sich zwischen der Ladekammer (22) und dem Ladebehälter (30) hin und her zu bewegen und die Batterie zwischen der Ladekammer (22) und dem zweiten Ladeständer (31) zu transportieren.

11. Behälterwechselstation nach Anspruch 10, wobei der zweite Ladestand (31) an beiden Seiten der Bewegungsbahn des Palettierers (25) angeordnet ist.

12. Behälterwechselstation nach Anspruch 10 oder 11, wobei der Ladebehälter (30) mit einem zweiten Stromverteilerschrank (32) versehen ist, wobei der zweite Stromverteilerschrank (32) zur Stromversorgung des zweiten Ladegestells (31) dient;
der zweite Stromverteilerschrank (32) ist vorzugsweise an einer vom Vollgutbehälter (20) abgewandten Seite der zweiten Ladestation (31) angeordnet.

## Revendications

1. Récipient à caractéristiques complètes qui comprend :
un corps de boîte (11), dans lequel le corps de boîte (11) est doté dedans d'une chambre de commutation (111), d'une chambre de charge (112) et d'une chambre de surveillance (113), dans lequel la chambre de commutation (111) est reliée à la chambre de charge (112) au moyen d'un passage d'accès, dans lequel la chambre de commutation (111) est utilisée pour remplacer la batterie du véhicule, et dans lequel la chambre de charge (112) est utilisée pour stocker la batterie du véhicule et charger la batterie du véhicule ;
une navette d'échange de batterie (12), dans lequel la navette d'échange de batterie (12) est disposée à l'intérieur du corps de boîte, et est apte à se déplacer d'avant en arrière entre la chambre de commutation (111) et la chambre de charge (112) ; le passage d'accès entre la chambre de commutation (111) et la chambre de charge (112) est pavé d'un rail, dans lequel la navette d'échange de batterie (12) se déplace le long du rail ;
un socle de charge (13), dans lequel le socle de charge (13) est disposé dans la chambre de charge (112), et comprend une pluralité de positions pour loger des batteries ; et
un dispositif de surveillance (15), dans lequel le dispositif de surveillance (15) est disposé dans la chambre de surveillance (113) et est utilisé pour recevoir des données de conditions de travail dans la chambre de commutation (111) et dans la chambre de charge (112) et envoyer une instruction d'exécution correspondante ;
qui est **caractérisé en ce que**
dans lequel la chambre de charge (112) présente une ouverture (19), dans lequel l'ouverture (19) est utilisable pour communiquer avec un récipient de charge (30) ;
la chambre de charge (112) est aussi dotée dedans d'un palettiseur (14), dans lequel le palettiseur (14) est utilisé pour sortir et placer la batterie sur le socle de charge (13) et remplacer la batterie par la navette d'échange de batterie (12) ;
la chambre de charge (112) est aussi pavée d'un rail, le palettiseur (14) est mobile le long du rail, le rail mobile du palettiseur (14) est perpendiculaire au rail mobile de la navette d'échange de batterie (12), le socle de charge (13) est disposé le long du rail mobile du palettiseur (14),
la voie de déplacement du palettiseur (14) est perpendiculaire à la voie de déplacement de la navette de d'échange de batterie (12).

2. Récipient à caractéristiques complètes selon la revendication 1, dans lequel les positions comportent une position de charge, une position nouvelle et une position ancienne, dans lequel la position de charge est utilisée pour charger la batterie du véhicule, et la nouvelle position est utilisée pour stocker la batterie du véhicule qui est complètement chargée, et l'ancienne position est utilisée pour stocker la batterie qui est sortie du véhicule.

3. Récipient à caractéristiques complètes selon au moins l'une des revendications 1 à 2, dans lequel la chambre de charge (112) est aussi dotée dedans d'une armoire de distribution d'énergie (18) et d'une armoire de commande principale (17), dans lequel l'armoire de distribution d'énergie (18) est utilisée pour alimenter en énergie le socle de charge (13), et l'armoire de commande principale (17) est utilisée pour alimenter en énergie la navette d'échange de batterie (12), le palettiseur (14) et le dispositif de surveillance (15) ;
de préférence le socle de charge (13) est doté d'un appareil de détection, dans lequel l'appareil de détection détecte la condition de travail du socle de charge (13), et dans lequel le dispositif de surveillance (15) reçoit les données de condition de travail envoyées par l'appareil de détection et envoie l'instruction d'exécution au palettiseur (14) selon ces données de condition de travail.

4. Récipient à caractéristiques complètes selon au moins l'une des revendications 1 à 3, dans lequel la chambre de commutation (111) est dotée dedans d'une voie de serrage, dans lequel la voie de serrage est utilisée pour stationner et positionner le véhicule, dans lequel la voie de serrage est dotée d'une ouverture (19) pour remplacer la batterie pour la navette d'échange de batterie (12), et dans lequel la voie de serrage est dotée d'une rampe de montée et descente (16) le long d'une direction d'entrée et de sortie de véhicule ;
de préférence, un appareil de détection est prévu sur la voie de serrage, dans lequel l'appareil de détection détecte la condition de travail de la voie de serrage, et dans lequel le dispositif de surveillance (15) reçoit les données de condition de travail envoyées par l'appareil de détection, et envoie l'instruction d'exécution à la navette d'échange de batterie (12) selon ces données de condition de travail.

5. Récipient à caractéristiques complètes selon au moins l'une des revendications 1 à 4, dans lequel le dispositif de surveillance (15) comporte un panneau de commande et une armoire de communication, dans lequel le panneau de commande est utilisé pour envoyer l'instruction d'exécution aux dispositifs dans la chambre de commutation (111) et dans la chambre de charge (112), et dans lequel l'armoire de communication est utilisée pour recevoir les données dans la chambre de commutation (111) et dans la chambre de charge (112) et les transmettre au panneau de commande.

6. Récipient à caractéristiques complètes selon la revendication 5, dans lequel
l'appareil de détection détecte une position ancienne vacante sur le socle de charge, et transmet un signal à l'armoire de communication, et l'armoire de communication transmet le signal au panneau de commande, et le panneau de commande ordonne au palettiseur selon le signal reçu de transporter la batterie reçue de la navette d'échange de batterie à la position ancienne vacante correspondante ;
de préférence, l'appareil de détection détecte aussi si la batterie sur la chambre de charge a été complètement chargée ou si la chambre de charge est vacante, et transmet le signal au panneau de commande, et le panneau de commande ordonne au palettiseur selon le signal reçu de transporter la batterie complètement chargée de la chambre de charge à la nouvelle position ou pour transporter la batterie déchargée de la position ancienne à la chambre de charge ;
de préférence, l'appareil de détection est un capteur à infrarouge ou un détecteur à coulomètre ;
et/ou l'appareil de détection détecte si le véhicule sur la voie de serrage est déjà arrivé à un emplacement de charge spécifié, et transmet le signal à l'armoire de communication, et l'armoire de communication transmet le signal au panneau de commande, et le panneau de commande ordonne à la navette d'échange de batterie de se déplacer à l'emplacement de commutation selon le signal reçu, et décharge la batterie du véhicule, et ensuite transfère la batterie sur le palettiseur ; de préférence, l'appareil de détection est un capteur à infrarouge.

7. Station de commutation de récipient qui est **caractérisée en ce qu'**elle comprend un récipient à caractéristiques complètes (20) selon au moins l'une des revendications 1 à 6 et un récipient de charge (30) ; dans laquelle le récipient à caractéristiques complètes (20) est doté dedans d'une chambre de commutation (21) et d'une chambre de charge (22) qui sont adjacentes l'une à l'autre, dans laquelle la chambre de commutation (21) est reliée à la chambre de charge (22) au moyen d'un passage d'accès, dans laquelle la chambre de commutation (21) est utilisable pour remplacer la batterie du véhicule, et dans laquelle la chambre de charge (22) est utilisable pour stocker la batterie du véhicule et charger la batterie du véhicule ;
dans laquelle le récipient de charge (30) est relié au récipient à caractéristiques complètes (20) et est en communication avec la chambre de charge (22) ;
dans laquelle le récipient de charge (30) est utilisable pour charger la batterie du véhicule.

8. Station de commutation de récipient selon la revendication 7, dans laquelle le récipient de charge (30) est disposé perpendiculairement au récipient à caractéristiques complètes (20) ;
de préférence, le premier côté de la chambre de charge (22) est doté du passage d'accès et le deuxième côté de la chambre de charge (22) est ouvert et est dirigé vers le récipient de charge (30), dans laquelle le premier côté est adjacent au deuxième côté.

9. Station de commutation de récipient selon la revendication 7 ou 8, dans laquelle la station de commutation de récipient (100) comprend aussi :
une navette d'échange de batterie (24), un palettiseur (25) et un premier socle de charge (223) ;
dans laquelle la navette d'échange de batterie (24) est disposée à l'intérieur du récipient à caractéristiques complètes (20), et est apte à se déplacer d'avant en arrière entre la chambre de commutation (21) et la chambre de charge (22), dans laquelle la navette d'échange de batterie (24) est utilisable pour remplacer la batterie sur le véhicule dans la chambre de commutation (21) ;
dans laquelle le premier socle de charge (223) est disposé à l'intérieur de la chambre de charge (22) ;
dans laquelle le palettiseur (25) est utilisable pour transférer la batterie entre le premier socle de charge (223) et la navette d'échange de batterie (24), et dans laquelle le palettiseur (25) est apte à se déplacer d'avant en arrière entre la chambre de charge (22) et le récipient de charge (30).

10. Station de commutation de récipient selon au moins l'une des revendications 7 à 9, dans laquelle la station de commutation de récipient (100) comprend aussi : un deuxième socle de charge (31) et un palettiseur (25) ;
dans laquelle le deuxième socle de charge (31) est disposé dans le récipient de charge (30), et dans laquelle une pluralité de positions de charge est prévue sur le deuxième socle de charge (31) ;
dans laquelle le palettiseur (25) est utilisable pour sortir et placer la batterie sur le deuxième socle de charge (31), dans laquelle le palettiseur (25) est apte à se déplacer d'avant en arrière entre la chambre de charge (22) et le récipient de charge (30) et transférer la batterie entre la chambre de charge (22) et le deuxième socle de charge (31).

11. Station de commutation de récipient selon la revendication 10, dans laquelle le deuxième socle de charge (31) est situé sur les deux côtés de la voie de déplacement du palettiseur (25).

12. Station de commutation de récipient selon la revendication 10 ou 11, dans laquelle le récipient de charge (30) est doté dedans d'une deuxième armoire de distribution d'énergie (32), dans laquelle la deuxième armoire de distribution d'énergie (32) est utilisée pour alimenter en énergie le deuxième socle de charge (31) ;
de préférence la deuxième armoire de distribution d'énergie (32) est disposée sur un côté du deuxième socle de charge (31) loin du récipient à caractéristiques complètes (20).
